# DEMANDE DE BREVET EUROPEEN

(11) **EP 0 964 369 A1**
(43) Date de publication de la demande: **15.12.1999**
(21) Numéro de dépôt: 99401409.0
(22) Date de dépôt: 10.06.1999
(51) Int. Cl.: G07F 7/02, G07F 7/00, B65F 1/14

(54) **Procédé et dispositif de gestion par carte à puce d'une dechetterie**

(30) Priorité: 10.06.1998 FR 9807271
(71) Demandeur: Sulo Applications, 92700 Colombes (FR)
(72) Inventeur: Schiltz, Patrick M., Sulo Applications, 92700 Colombes (FR)
(74) Mandataire: Schmit, Christian Norbert Marie

(57) **Abrégé**

Pour gérer une déchetterie (1), on propose de placer à l'entrée de cette déchetterie, une borne (11) lecteur de cartes à puce. Cette borne reconnaît la carte à puce d'un utilisateur et provoque l'ouverture d'une porte (9). Après l'opération de dépôt de déchets, l'utilisateur doit à nouveau introduire sa carte à puce dans une autre borne (12) placée à l'intérieur de la déchetterie et qui commande la même porte. Avec cette double lecture, on élabore un message relatif à l'opération de dépôt. Ce message permet d'assurer une gestion simple de la déchetterie. Selon un mode particulier de l'invention, l'évaluation des déchets déposés est faite entre la première et la seconde introduction de la carte à puce.

## Description

La présente invention a pour objet un procédé et un dispositif de gestion d'une déchetterie par carte à puce. Elle est utilisable aussi bien par des utilisateurs privés que par des utilisateurs industriels. Elle a pour objet d'organiser et de simplifier la gestion à distance des déchetteries.

Dans ce domaine, les pressions écologiques modernes ont fait naître le besoin d'un tri sélectif des déchets. Les abords des villes ont alors été aménagés avec des déchetteries destinées à recevoir les déchets apportés par des habitants, des industriels, des fonctionnaires municipaux utilisateurs de la déchetterie. Le financement de la construction et du fonctionnement de ces déchetteries est organisé par la revente des déchets collectés, par des taxes locales, quelques fois par des paiements effectués par les utilisateurs de déchetteries au moment de cette utilisation. La gestion et l'équipement des déchetteries sont excessivement onéreuses. Un des buts de la présente invention est de proposer un dispositif de gestion qui en réduit les coûts ou permet une maîtrise de la correspondance coût - utilisation. En outre, la gestion doit être simplifiée le plus possible de façon à limiter les interventions administratives pour des opérations qui, économiquement, n'ont par ailleurs pas beaucoup de rendement.

L'invention a pour objet de remédier à ces inconvénients en proposant un dispositif et un procédé de gestion par carte à puce. Le principe de l'invention consiste à l'issue d'une première lecture d'une carte à puce à autoriser l'accès au service pour une première session. Puis la quantité de service consommée au cours de cette première session est mesurée. Ensuite, au moins lorsque l'utilisateur vient pour une seconde session consommer le même service ou un service équivalent, on décompte dans sa carte (ou dans un fichier du système correspondant à sa carte) des unités prépayées correspondant au service consommé à la première session. Ainsi de suite pour chaque session suivante. Il y donc deux accès nettement séparés dans le temps, deux lectures de la carte à puce, pour prendre en compte le début de la mesure d'une part, et le paiement d'autre part.

Dans le cadre de la gestion d'une déchetterie, ces deux lectures reviennent dans un exemple préféré à aménager la déchetterie avec une porte d'entrée, une barrière relevable, et à placer de part et d'autre de cette barrière, une borne d'accès auprès de laquelle un utilisateur peut introduire une carte à puce. Selon l'invention, l'utilisateur doit placer sa carte à puce pour pouvoir entrer dans la déchetterie. Il doit la replacer dans la borne de sortie afin de pouvoir ressortir. Un message est alors élaboré en relation avec les événements qui se sont produit entre ces deux introductions. Le message peut dépendre de la personnalité de l'utilisateur, de la nature des déchets, ou encore d'autres considérations. On montrera qu'en agissant ainsi on simplifie les charges de personnel précédentes.

L'invention a donc pour objet un procédé d'évaluation des déchets déposés dans une déchetterie caractérisé en ce qu'il comporte les étapes suivantes :
- au début d'une session de dépôt de déchets, un utilisateur introduit une carte à puce munie d'unités prépayées qu'il détient dans une borne en relation avec un système qui gère l'accès à la déchetterie,
- la borne lit la carte à puce, puis autorise un accès à la déchetterie,
- l'utilisateur reprend la carte,
- on mesure la quantité de déchets déposés par l'utilisateur au cours de la session et on produit un message relatif à cette mesure,
- l'utilisateur réintroduit la carte à puce dans la borne pour une deuxième lecture,
- au cours de cette deuxième lecture, on enregistre le message dans un fichier d'un système à microprocesseur en relation avec la carte à puce.

L'invention a aussi pour objet un dispositif de gestion d'une déchetterie caractérisé en ce qu'il comporte des cartes à puce détenues par des utilisateurs de la déchetterie, une porte commandée par ces cartes à puce pour gérer l'accès à la déchetterie, deux bornes de commande situées respectivement de part et d'autre de la porte commandée, un lecteur de carte à puce dans chaque borne pour lire les cartes à puce, et des moyens pour produire un message relatif à la lecture d'une même carte à puce par les lecteurs des deux bornes, un dispositif de mesure de la quantité de déchets à déposer par un utilisateur dans la déchetterie et des moyens pour modifier le message en fonction de cette mesure.

L'invention sera mieux comprise à la lecture de la description qui suit et à l'examen des figures qui l'accompagnent. Celles-ci ne sont données qu'à titre indicatif et nullement limitatif de l'invention. Les figures montrent :
Figure 1 : une représentation schématique d'une déchetterie et du dispositif de gestion conforme à l'invention,
Figure 2 : une variante d'un exemple de mesure de la quantité de déchets déposés par un utilisateur,
Figure 3 : une représentation en détail du procédé de gestion mis en oeuvre dans le dispositif de l'invention.

Le procédé selon l'invention comporte la double lecture d'une même carte à puce munie d'unités prépayées pour prendre en compte une seule session de dépôt de déchets.

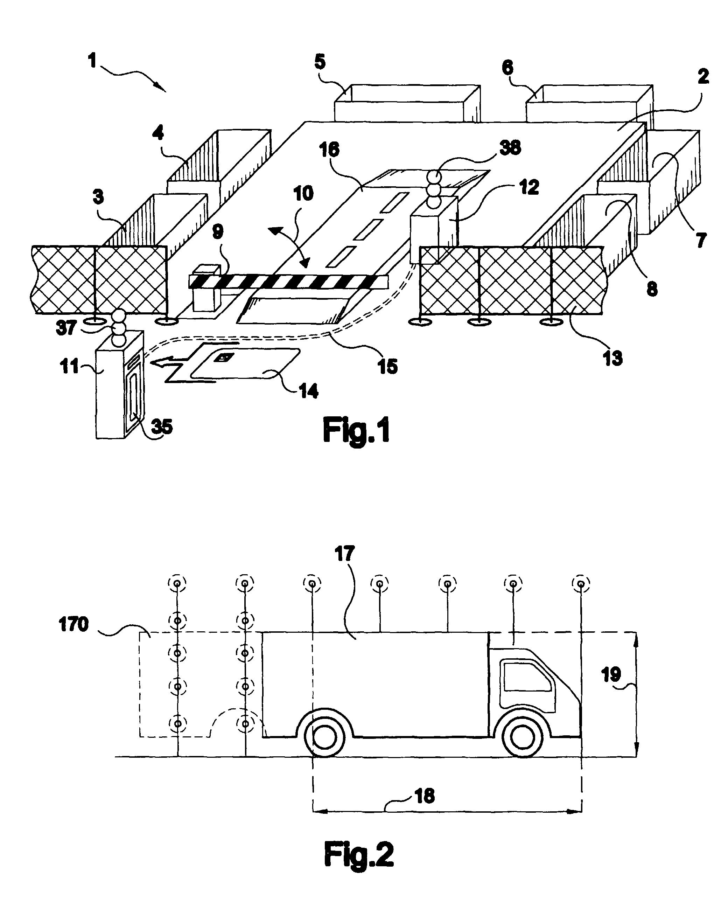

La figure 1 montre un dispositif de gestion d'une déchetterie conforme à l'invention. Dans celle-ci, une déchetterie 1 comporte un quai 2 et un ensemble de bacs 3 à 8 permettant à des utilisateurs de répartir les déchets en fonction de leur nature. Traditionnellement, ces déchets sont répartis en métaux ferreux, métaux non ferreux, papiers et cartons, branchages et feuillages, gravats. D'autres catégories sont envisageables en fonction des habitudes locales. La déchetterie comporte une porte d'accès 9. La porte d'accès 9 est représentée ici sous la forme d'une barrière relevable selon une flèche 10. La porte 9 est commandée par des bornes d'accès 11 et 12 placées respectivement à l'intérieur et à l'extérieur de la déchetterie. Les bornes sont placées de préférence sur le coté gauche pour permettre à un utilisateur d'y introduire une carte à puce sans descendre de son véhicule.

L'intérieur de la déchetterie est défini par rapport à une palissade 13 qui entoure la déchetterie pour empêcher les dépôts sauvages. L'extérieur est généralement le domaine public où la circulation est libre. Les bornes 11 et 12 commandent l'ouverture de la porte par introduction de cartes à puce 14 détenue par des utilisateurs. Au moment de la lecture d'une carte à puce 14, à l'entrée, puis à la sortie d'un véhicule, les bornes 11 et 12, reliées ensemble par une liaison fonctionnelle 15, élaborent le début puis le contenu d'un message relatif à la double lecture de la carte 14. On verra plus loin où ce message en cours d'élaboration peut être stocké : dans la carte à puce, dans une des bornes, ou bien dans un centre de télégestion.

Le message est essentiellement lié à la personnalité de l'utilisateur ou à la quantité de services utilisés, à la quantité de déchets déposés par cet utilisateur. On verra plus loin comment cette quantité peut être évaluée, subjectivement ou objectivement. En effet, dans un cas particulier, le fait même de passer par les deux bornes sera en soi, le dispositif de mesure de la quantité, forfaitaire, des déchets déposés.

De manière préférée, on a disposé dans l'invention un pont bascule 16 pour peser les véhicules avant le dépôt des déchets et après le dépôt des déchets. Le pont de pesage 16 est disposé, dans l'invention, à l'intérieur de la déchetterie, directement en aval de la barrière 9 de façon à ce qu'un véhicule qui entre dans la déchetterie, passe automatiquement sur ce pont bascule. Le pont 16 peut être ainsi, soit un pont de grande longueur comme représenté (mais est alors excessivement coûteux), soit de faible longueur (par exemple 1 mètre) et capable de mesurer, au passage et sans arrêt le poids de chacun des essieux du véhicule et d'additionner ces poids pour en déterminer le poids en charge d'une part, et la tare au retour, d'autre part. Dans un exemple préféré, un pont de pesage de ce dernier type est un pont du type DYWA de la société DIGISENS SA à MORA en Suisse. Quand le pont de pesage a une faible longueur, il est placé environ à 6 mètres de la barrière 9, en aval de cette barrière lorsqu'on entre dans la déchetterie.

La figure 2 montre un autre exemple de mesure. Dans le cas où le coût d'un pont de pesage 16 serait trop onéreux, on peut le remplacer par un panneau de photodétecteurs mis en regard d'un panneau lumineux. Lorsque qu'un véhicule 17 passe entre les deux panneaux, il masque, pour certains photodétecteurs, la réception de la lumière émise par l'autre panneau. On déduit de ce masquage, d'une part la longueur 18, d'autre part la hauteur 19 du véhicule. On peut alors attribuer, pour le véhicule considéré, forfaitairement, une quantité de déchets déposés. Dans les deux cas présentés la mesure est objective.

Enfin, le dispositif de mesure peut être subjectif : on fait par exemple une déduction de l'entrée du véhicule d'un utilisateur dans la déchetterie. La quantité mesurée est forfaitaire. Elle est alors liée à la personnalité de l'utilisateur. Les habitudes de cet utilisateur auront au préalable été codifiées par un contrat enregistré par ailleurs dans une table. Il y aura dans cette table, pour cet utilisateur, une correspondance entre ses entrées et les quantités et natures de déchets déposés. Le message élaboré tiendra compte de ces différentes mesures objectives et ou subjectives.

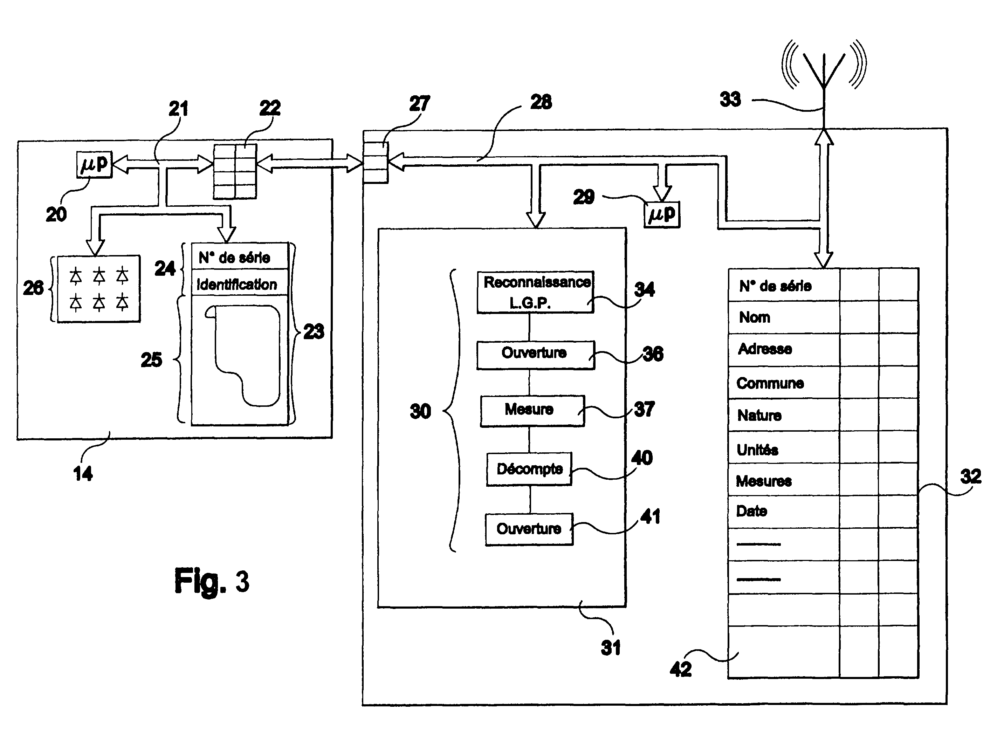

La figure 3 montre le procédé de l'invention. Une carte à puce 14 comporte de préférence selon l'invention, un microprocesseur 20 relié par un bus 21 de données, d'adresses et de commandes, à un connecteur de cartes à puce 22, à une mémoire 23 pour contenir des données 24 et un programme 25, et à une mémoire 26 d'unités prépayées.

Le connecteur 22 entre en relation avec un connecteur 27 du lecteur enregistreur de cartes à puce présent dans chaque borne 11 ou 12. Dans la borne 11 (ou 12) le connecteur 27 est relié par un bus 28 du même type que le bus 21, à un microprocesseur 29. Le microprocesseur 29 exécute un programme 30 contenu dans une mémoire programme 31 et enregistre des messages dans une mémoire de données 32 de la borne. Les messages peuvent par ailleurs être transmis par un modem, non représenté, en direction d'un centre de télégestion. Le modem est relié au centre de télégestion par un câble ou par une antenne 33. La liaison est périodique, par exemple joumalière. La liaison peut être une liaison de type ligne téléphonique câblée. En variante, le contenu de la mémoire 32 n'est stocké ni dans une borne ni dans l'autre mais dans la carte à puce 14 d'un utilisateur ou pas stocké du tout mais seulement envoyé.

Le programme 30 comporte une première instruction 34 exécutée au moment où un utilisateur s'approche de la borne 11 d'entrée de la déchetterie. Il introduit alors sa carte à puce dans le lecteur de cette borne et celle-ci provoque une reconnaissance de la carte à puce. De manière préférée, la carte à puce peut faire elle-même une reconnaissance du lecteur. Des protocoles de reconnaissance de ce type sont connus, avec ou sans composition d'un code secret.

Il peut par ailleurs être demandé à l'utilisateur de sélectionner par des boutons 35 présents sur la borne, la nature des déchets qu'il compte déposer, ou d'indiquer d'autres informations utiles. En variante, cette sélection se fera à la sortie dans la borne 12. Une fois les opérations de reconnaissance effectuées, la porte est ouverte au cours d'une opération 36. Cette ouverture 36 peut s'agrémenter d'une gestion de feux tricolores 37 présents à proximité des bornes 11 et 12 pour organiser le passage en entrée et en sortie de la déchetterie. A l'endroit de la barrière 9. De préférence, à l'endroit de cette barrière il y a une voie unique.

Au cours d'une opération ultérieure 37, dans un exemple une opération de pesage, la quantité de déchets à déposer est mesurée. Comme indiqué, cette mesure peut être forfaitaire, par prise en compte d'une unité de passage, peut être une mesure de poids par le pont de pesage 16, ou une mesure de longueur 18 et de hauteur 19. La mesure objective de poids est faite avant et après le dépôt de déchets dans les bacs 3 à 8.

A la sortie, l'utilisateur s'approche avec son véhicule de la borne 12 et y introduit sa carte. Celle-ci est à nouveau reconnue au cours d'une opération 39. Le dernier pesage, ou la dernière mesure, enregistré par la borne de pesage 16 peut par exemple être affecté au premier utilisateur qui introduit à nouveau sa carte dans la borne après ce pesage, ou cette mesure. L'opération 39 peut être du même type que l'opération 34 ou éventuellement comporter moins de vérifications. Elle est suivie d'une opération 40 de décompte, en fait une opération d'élaboration finale du message relatif à la quantité de déchets déposés par l'utilisateur (à la quantité de services consommés par l'utilisateur).

Dans une variante préférée, le décompte, le message résultant, comportera une commande adressée à la carte 14 pour oblitérer une ou plusieurs unités de la mémoire 26. Dans le cas où le décompte ne serait pas forfaitaire mais proportionnel, le nombre d'unités 26 est proportionnel à la quantité mesurée par le pont bascule 16 des déchets déposés. Par exemple, cette évaluation est faite par tranche de 100 kg. Si le décompte est forfaitaire, il sera effectué par lecture d'une table 42 présente dans la mémoire 32. La table 42 renseigne par avance, du fait du contrat, sur le nombre d'unités à décompter chaque fois qu'un utilisateur reconnu se présente. Les unités de cet utilisateur peuvent être comptabilisées dans sa carte ou dans la mémoire 32. Dans ce cas la mémoire 32 comptera les unités prépayées.

En variante, le message ne sera pas enregistré dans la carte à puce 14 (par oblitération de la mémoire 26), mais sera enregistré dans la mémoire 32. Celle-ci prélèvera les informations relatives à chaque véhicule et concernant tout ou partie des informations suivantes : numéro de série, nom de l'utilisateur, adresse de l'utilisateur, commune, nature des déchets, nombre d'unités d'opérations de dépôts affectées aux opérations en cours, mesure avant et après de la quantité des déchets, date du jour, et ainsi de suite. Les unités décomptées, le cas échéant, sont relatives à ces informations prélevées. De ce fait, il sera possible de tenir un fichier et de gérer des situations aussi diverses que des abonnements de type proportionnels destinés à des industriels, ou des abonnements gratuits réservés aux résidants d'une commune. En plus, avec l'indication relative à la commune, il sera possible de répartir le coût de la gestion de la déchetterie entre plusieurs communes associées.

A l'issue de l'opération de décompte et de constitution du message, une demière instruction de la borne 12 permet par une opération 41, d'ouvrir à nouveau la barrière 9 et d'actionner en correspondance les feux tricolores 37 et 38. De préférence bien entendu, pour limiter les frais, une seule des bornes sera munie du microprocesseur 29 et de l'équipement de commande de ce microprocesseur.

Avec l'invention, en repoussant au besoin d'avoir payé au début d'une session suivante, on règle tous les problèmes. Il en est de même si la barrière de la déchetterie reste ouverte et qu'un utilisateur sort sans avoir représenté sa carte à puce. A sa prochaine venue, il ne pourra accéder à la déchetterie qu'après décompte dans sa carte des unités consommées la fois précédente.

En effet, dans le procédé selon l'invention, si un utilisateur ressort de la déchetterie sans réinsérer sa carte dans une borne de sortie. Soit parce que la borne ne fonctionne pas, soit qu'il oublie, soit qu'il cherche à frauder délibérément, alors le dispositif garde en mémoire la non clôture de la session de dépôt de cet utilisateur. Notamment, le dispositif garde en mémoire le poids entrant du véhicule de cet utilisateur. Lors de la venue suivante de cet utilisateur, le dispositif débitera automatiquement la carte de celui ci avant de le laisser entrer à nouveau. Par contre si cet utilisateur ne se représente plus dans la déchetterie, alors la quantité de service consommée, et non encore débitée, constituera une perte de gain pour la déchetterie. Néanmoins, cette perte est négligeable comparée à la simplification de la gestion d'une telle déchetterie.

## Revendications

1. Procédé d'évaluation des déchets déposés dans une déchetterie caractérisé en ce qu'il comporte les étapes suivantes:
- au début d'une session de dépôt de déchets, un utilisateur introduit une carte (14) à puce munie d'unités prépayées qu'il détient dans une borne en relation avec un système qui gère l'accès à la déchetterie,
- la borne lit la carte à puce, puis autorise un accès à la déchetterie,
- l'utilisateur reprend la carte,
- on mesure la quantité de déchets déposés par l'utilisateur au cours de la session et on produit un message relatif à cette mesure,
- l'utilisateur réintroduit la carte à puce dans la borne pour une deuxième lecture,
- au cours de cette deuxième lecture, on enregistre le message dans un fichier d'un système à microprocesseur en relation avec la carte à puce.

2. Procédé selon la revendication 1, caractérisé en ce que la deuxième lecture de la même carte à puce se produit préalablement au début d'une deuxième session de dépôt des déchets.

3. Procédé selon l'une des revendications 1 à 2, caractérisé en ce que le message est un message de décompte d'unités prépayées disponibles dans la carte à puce.

4. Dispositif de gestion d'une déchetterie (1) caractérisé en ce qu'il comporte des cartes (14) à puce détenues par des utilisateurs de la déchetterie, une porte (9) commandée par ces cartes à puce pour gérer l'accès à la déchetterie, deux bornes (11, 12) de commande situées respectivement de part et d'autre de la porte commandée, un lecteur (27) de carte à puce dans chaque borne pour lire les cartes à puce, et des moyens (31) pour produire un message relatif à la lecture d'une même carte à puce par les lecteurs des deux bornes, un dispositif (16-19) de mesure de la quantité de déchets à déposer par un utilisateur dans la déchetterie et des moyens (29) pour modifier le message en fonction de cette mesure.

5. Dispositif selon la revendication 4, caractérisé en ce qu'il comporte un pont (16) de pesée d'un véhicule d'un utilisateur, ce pont étant situé à l'intérieur de la déchetterie à proximité de la porte commandée.

6. Dispositif selon l'une des revendications 4 à 5, caractérisé en ce qu'il comporte un moyen (27, 33) pour enregistrer, dans la carte à puce ou dans un fichier (32) en relation avec les lecteurs, des informations de dépôt de déchets dans la déchetterie.

7. Dispositif selon la revendication 6, caractérisé en ce qu'il comporte un circuit (26) pour décompter des unités dans les cartes, ces unités étant de type forfaitaire pour chaque accès, de type proportionnel à une mesure de quantités déposées, relatives à une période d'abonnement, relatives à une nature de déchet, ou relatives à un type de communes.

8. Dispositif selon l'une des revendications 4 à 7, caractérisé en ce qu'il comporte un transmetteur (33) téléphonique pour transmettre, de préférence régulièrement, le message à un centre de télégestion.
